# EUROPÄISCHE PATENTSCHRIFT

(11) **EP 2 169 338 B1**
(45) Veröffentlichungstag und Bekanntmachung des Hinweises auf die Patenterteilung: **03.10.2018**
(21) Anmeldenummer: 09002509.9
(22) Anmeldetag: 23.02.2009
(51) Int. Cl.: F28D 9/00

(54) **Gaskühler**
Gas cooler
Refroidisseur de gaz

(30) Priorität: 17.03.2008 DE 102008014375
(43) Veröffentlichungstag der Anmeldung: 31.03.2010
(73) Patentinhaber: MAHLE Behr GmbH & Co. KG, 70469 Stuttgart (DE)
(72) Erfinder: Geskes, Peter, 73760 Ostfildern (DE)
(74) Vertreter: Grauel, Andreas

(56) Entgegenhaltungen:
- EP-A- 1 901 020
- WO-A-2005/045344
- WO-A-2007/031230
- WO-A-2007/045406
- JP-A- 2000 121 286
- JP-A- 2001 027 157
- US-A- 5 222 551
- US-A- 5 806 581

## Beschreibung

Die vorliegende Erfindung betrifft einen Gaskühler, insbesondere für einen Verbrennungsmotor, nach dem Oberbegriff des Anspruchs 1.
Aus dem Bau von Abgaskühlern für Verbrennungsmotoren zur Kühlung von rückgeführtem Abgas zur Reduktion von Schadstoffemissionen ist es bekannt, den Wärmetauscher in einer Stapelscheiben-Bauweise auszuführen, wobei zur Erzielung eines ausreichend hohen Wirkungsgrads zusätzlich strukturierte Turbulenzeinlagen zwischen benachbarten parallelen Scheiben angeordnet sind.
Die WO 2005/045344 A1 offenbart einen Ladeluft-Kühlmittel-Wärmeübertrager in Stapelscheibenbauweise gemäß dem Oberbegriff von Anspruch 1. Die JP 2001 027157 A und US 5 222 551 A offenbaren einen Gaskühler nach dem Oberbegriff von Anspruch 1.
Es ist die Aufgabe der Erfindung, einen Gaskühler für einen Verbrennungsmotor anzugeben, der bei einfacher Bauweise eine hohe thermische Übertragungsleistung zwischen einem gasförmigen Fluid und einem zweiten Fluid aufweist.
Diese Aufgabe wird für einen eingangs genannten Gaskühler erfindungsgemäß mit den kennzeichnenden Merkmalen des Anspruchs 1 gelöst. Dadurch, dass sowohl die ersten Strömungspfade als auch die zweiten Strömungspfade zumindest über einen überwiegenden Teil ihrer Länge im Wesentlichen parallel zueinander in der Längsrichtung bzw. Hauptströmungsrichtung der Fluide verlaufen, kann eine gute Wärmeübertragung bei zugleich geringem Druckverlust insbesondere des gasförmigen Fluids erreicht werden.

Gemäß der Erfindung haben zumindest die ersten Strömungspfade, und auch die zweiten Strömungspfade einen wellenförmigen Verlauf in der Längsrichtung. Durch diesen wellenförmigen Verlauf wird die Weglänge vergrößert und somit die Wärmeübertragung bei gegebener Baugröße, wobei Turbulenzen nur in mäßigem Umfang in den Gasstrom eingebracht werden.

Zur weiteren Vergrößerung der angrenzenden Flächen zwischen den ersten und zweiten Strömungspfaden können zumindest einige der ersten Strömungspfade zumindest eine in der Längsrichtung verlaufende Rille aufweisen.

Bei einer möglichen Ausführungsform der Erfindung sind die aufeinander gestapelten Scheibenelemente in einem Gehäuse angeordnet. In zweckmäßiger Detailgestaltung kann dabei das Gehäuse als Aussparung in einem Bauteil des Verbrennungsmotors ausgebildet sein, wodurch eine besonders raumsparende Anordnung des Wärmetauschers ermöglicht ist. Bei einer solchen Aussparung kann es sich z. B. um einen Hohlraum in einem Ansaugmodul oder Ähnliches handeln. Zumindest ein Anschluss insbesondere für das zweite Fluid kann je nach bevorzugter Bauform zweckmäßig an dem Gehäuse vorgesehen sein. Auch das Vorsehen von beiden Anschlüssen für das zweite Fluid an dem Gehäuse ist denkbar. In alternativer vorteilhafter Ausgestaltung kann der erfindungsgemäße Gaskühler ohne ein äußeres Gehäuse ausgebildet sein, zum Beispiel indem sämtliche Paare von Scheibenelementen randseitig stoffdicht miteinander verbunden sind.

Für übliche Verbrennungsmotoren ergibt sich eine besonders günstige Dimensionierung des Gaskühlers, wenn eine maximale Breite zumindest einiger der ersten Strömungspfade zwischen etwa 1,5 mm und etwa 5 mm beträgt. Ebenfalls vorteilhaft sollte eine maximale Höhe zumindest einiger der ersten Strömungspfade zwischen etwa 2 mm und etwa 8 mm betragen. Insoweit eine längsgerichtete Rille zur Verbesserung der thermischen Übertragung in der Wand zumindest einiger der ersten Strömungspfade vorgesehen ist, sollte die Tiefe dieser Rille zwischen etwa 0,1 mm und etwa 1 mm betragen. Diese Dimensionierung des Gaskühlers ist insbesondere für eine Verwendung als Abgaskühler zweckmäßig, da hierdurch eine Optimierung zur Vermeidung von Verblockungen durch angesammelte Ablagerungen erzielt wird.

Ganz allgemein wird bei einem erfindungsgemäßen Gaskühler bevorzugt darauf verzichtet, zumindest aus der Seite des ersten Fluids zusätzliche Turbulenzeinlagen zwischen den Scheibenelementen vorzusehen. Solche zusätzlichen Turbulenzeinlagen sind kostenintensiv, materialintensiv und können je nach Auslegung insbesondere bei Verwendung als Abgaswärmetauscher einer Verblockung bedingt durch Ablagerungen Vorschub leisten. Besonders Abgaskühler werden aufgrund der korrosiven Eigenschaften des Abgases häufig aus Edelstahl hergestellt, wobei Turbulenzeinlagen aus Edelstahl auch aufgrund der schlechten thermischen Leitfähigkeit von Edelstahl ungünstig sind. Ein erfindungsgemäßer Gaskühler ohne Turbulenzeinlage ist in seiner Leistungsfähigkeit bzw. wärmeübertragenden Oberfläche bei gegebenem Bauraum oberhalb eines herkömmlichen Rohrbündelkühlers ohne Rippen anzusiedeln und erreicht zum Teil auch die wärmeübertragende Oberfläche von Kühlern mit Rippen.

Bei einer weiteren möglichen Ausführungsform der Erfindung ist es vorgesehen, dass die ersten Strömungspfade über einen ersten Abschnitt ihres Verlaufs thermisch mit den zweiten Strömungspfaden im Austausch stehen und über einen zweiten Abschnitt ihres Verlaufs thermisch mit einer Schar von dritten Strömungspfaden im Austausch stehen. Hierdurch sind mehrere Abschnitte über den Verlauf des Gasstroms definiert, so dass eine besonders effiziente mehrstufige Kühlung des Gases ermöglicht ist. Insbesondere können verschiedene Kühlfluide in verschiedenen Temperaturbereichen verwendet werden, z. B. in einer ersten Stufe ein relativ warmes Motorkühlmittel und in einer zweiten Stufe ein relativ kaltes Kühlmittel eines Niedertemperatur-Kühlkreislaufs.

Bei einer weiteren bevorzugten Detailgestaltung ist der Gaskühler bezüglich der Strömung beider Fluide als I-flow-Kühler ausgebildet. Je nach Anforderungen kann er alternativ, aber auch zumindest bezüglich der Strömung des ersten Fluids und/oder des zweiten Fluids, als U-flow-Kühler ausgebildet sein.

Allgemein vorteilhaft ist das gasförmige Fluid Abgas, Ladeluft oder ein Abgas-Ladeluft-Gemisch des Verbrennungsmotors. Ein erfindungsgemäßer Kühler ist besonders geeignet, als Abgaskühler und/oder Ladeluftkühler eines Verbrennungsmotors eingesetzt zu werden, da er eine hohe Tauscherleistung bei relativ geringem Druckverlust für den Gasstrom bereitstellt.

Weitere Merkmale und Vorteile der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine räumliche Schnittansicht eines ersten Ausführungsbeispiels eines erfindungsgemäßen Gaskühlers.
- Fig. 2: zeigt eine ebene Schnittansicht eines zweiten Ausführungsbeispiels der Erfindung.
- Fig. 3: zeigt eine schematische Draufsicht auf einen Gaskühler gemäß Fig. 1.
- Fig. 4: zeigt ein weiteres Ausführungsbeispiel eines Gaskühlers in schematischer Draufsicht von oben.
- Fig. 5: zeigt ein weiteres Ausführungsbeispiel eines erfindungsgemäßen Gaskühlers in schematischer Draufsicht von oben.
- Fig. 6: zeigt eine Detaildarstellung eines Scheibenpaares eines erfindungsgemäßen Wärmetauschers.

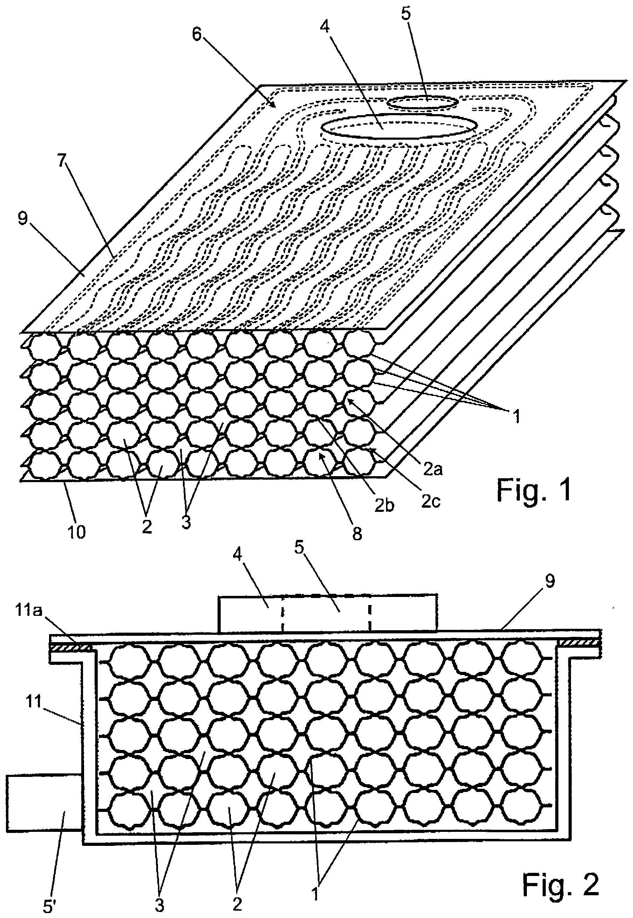

Der in Fig. 1 gezeigte erfindungsgemäße Wärmetauscher besteht aus einer Mehrzahl von sich in einer Ebene erstreckenden Scheibenelementen 1, die parallel zueinander aufeinander gestapelt und zumindest bereichsweise stoffschlüssig miteinander verbunden sind. Der Wärmetauscher ist in Fig. 1 senkrecht zu einer Längsrichtung geschnitten dargestellt, so dass in Fig. 1 im Wesentlichen ein halber Wärmetauscher zu sehen ist.

Die einzelnen flächigen Scheibenelemente 1 sind Blechteile aus Aluminium, Stahl oder Edelstahl, in die durch formgebende Verfahrensschritte, z. B. Prägen und/oder Tiefziehen, Strukturen zur Ausbildung von Scharen von kanalartigen Strömungspfaden 2, 3 eingebracht sind. Strömungspfade erster Art 2 dienen dabei der Führung eines ersten, gasförmigen Fluids, im vorliegenden Ausführungsbeispiel Abgas eines Verbrennungsmotors, und Strömungskanäle zweiter Art 3, die jeweils eine kleinere Querschnittsfläche als die Strömungspfade 2 erster Art aufweisen, dienen der Führung eines flüssigen Fluids, vorliegend Kühlmittel eines Motor-Kühlkreislaufs des Verbrennungsmotors eines Kraftfahrzeugs, um die Wärme des Gases in den ersten Strömungspfaden 2 abzuführen. Die Scheibenelemente 1 bilden dabei jeweils eine Trennwand zwischen benachbarten, flächig aneinander angrenzenden Strömungspfaden erster und zweiter Art 2, 3 aus.

In der Längsrichtung verlaufen die Strömungspfade erster und zweiter Art 2, 3 parallel zueinander und haben zur Verbesserung des Wärmeübergangs einen um die Längsrichtung leicht gewellten Verlauf.

In den bezüglich der Längsrichtung endseitigen Bereichen des Gaskühlers befinden sich jeweils ein erster Kanal 4 zur Zuführung oder Abführung des ersten Fluids und ein vom Querschnitt her kleiner ausgebildeter zweiter Kanal 5 zur Zuführung oder Abführung des zweiten Fluids. Die Kanäle 4, 5 sind durch miteinander fluchtende Durchbrechungen der Scheibenelemente 2, 3 ausgeformt und erstrecken sich senkrecht zu der Ebene der Scheibenelemente 1.

Zur Ausbildung der Zuführ- oder Abführkanäle 4, 5 der Fluide haben die ausgestanzten Durchbrechungen der Scheibenelemente 1 jeweils aus der Bauart von Scheiben-Wärmetauschern bekannte aufgebogene Umrandungen 4a, 5a, durch die abwechselnd die Strömungspfade 2, 3 einer Ebene bzw. eines angrenzenden Paares von Scheibenelementen 1 von der benachbarten, jeweils anderen Schar von Strömungspfaden 2, 3 der nächsten Lage von Scheibenelementen 1 getrennt werden.

Während die parallelen Strömungspfade 2, 3 über einen überwiegenden Teil der Länge des Wärmetauschers verlaufen, sind in dem kürzeren Übergangsbereich zwischen den Zuführkanälen 4, 5 und den parallel zur Längsrichtung verlaufenden Strömungspfaden 2, 3 Zuführstrukturen 6 eines Verteilerbereichs vorgesehen, mittels derer eine möglichst gleichmäßige Verteilung der Fluidströme auf die einzelnen Strömungspfade 2, 3 erfolgt.

Zum Abschluss der Strömungspfade 2, 3 gegenüber einem Außenraum weisen die Scheibenelemente 1 einen vollständig umlaufenden, stegartig vorstehenden Rand 7 auf, mittels dessen sie dichtend stoffschlüssig aneinander festgelegt sind.

Zwischen den gleichen Scheibenelementen 1 angeordnete benachbarte Strömungspfade der gleichen Art 2, 3 können zumindest bereichsweise stoffschlüssig voneinander getrennt sein, müssen das je nach Anforderungen aber nicht.

In den vorliegenden Ausführungsbeispielen haben die Scheibenelemente 1 jeweils rillenartige Einprägungen 8, durch die in Längsrichtung durchgängig verlaufende Rillen der Wandungen der einzelnen Strömungspfade 2, 3 ausgeformt sind. Die Strömungspfade für das gasförmige Fluid 2 haben dabei einen wabenartigen Querschnitt von im Vergleich zu den Strömungspfaden zweiter Art 3 relativ gleichmäßigem Durchmesser, wobei benachbarte Blechscheiben 1 im Bereich der rillenartigen Vorsprünge 8 aneinander angrenzen und über die den größten Teil der Länge des Wärmetauschers durchgängig stoffschlüssig miteinander verlötet sind. Somit sind im vorliegenden Beispiel die Strömungspfade 2 jeweils stoffschlüssig voneinander zumindest über den größten Teil der Länge des Gaskühlers unter Ausbildung separater Strömungskanäle getrennt, was jeweils auch für benachbarte Strömungspfade 3 zweiter Art gilt.

Die wabenartigen Strömungspfade erster Art 2 haben steil geneigte Seitenwände 2a, die in einem Umkehrbereich 2b münden, so dass zwei aufeinanderfolgende Seitenbereiche 2a einen im Querschnitt im Wesentlichen V-förmigen Seitenarm des angrenzenden Kanals zweiter Art ausformen. Ähnliche V-förmige Seitenarme sind durch im Wesentlichen in Querrichtung verlaufende Abschnitte 2c des Querschnitts der Strömungspfade 2 ausgeformt, die durch die eingeprägten Rillen 8 begrenzt werden, so dass die Strömungspfade 3 des flüssigen Fluids eine Querschnittsform nach Art eines vierzackigen Sterns oder einer Raute mit konkaven Wänden aufweisen.

Anders ausgedrückt sind die Seitenwände der Strömungspfade erster Art 2 für das gasförmige Fluid zum überwiegenden Teil durch konvexe Wandabschnitte 2a, 2c begrenzt, während die Seitenwände der Strömungspfade 3 für das flüssige Fluid zum überwiegenden Teil durch konkave Wandabschnitte begrenzt sind, so dass die Querschnittsfläche der Strömungspfade erster Art deutlich größer ist als die Querschnittsfläche der Strömungspfade zweiter Art. Hierdurch wird den unterschiedlichen Aggregatzuständen bzw. Volumenströmen der beiden Fluide Rechnung getragen.

In dem Gaskühler nach Fig. 1 sind keine zusätzlichen, separaten Turbulenzeinlagen vorgesehen, wobei durch die besondere Ausformung der Strömungspfade 2, 3 dennoch eine sehr hohe Wärmeübertragungsleistung zwischen dem gasförmigen und dem flüssigen Fluid erzielt werden kann, ohne dass das gasförmige Fluid einen hohen Druckabfall erfährt.

In dem ersten Ausführungsbeispiel nach Fig. 1 ist der Stapel aus geformten Scheibenelementen 1 zwischen einer oberen Abdeckplatte 9 und einer unteren Abdeckplatte 10 aufgenommen, die obere und untere Abschlüsse des in sich geschlossenen Stapels aus Scheibenelementen 1 ausbilden.

In der in Fig. 2 gezeigten abgewandelten Ausführungsform ist lediglich eine obere Abdeckplatte 9 vorhanden, über die der Stapel aus Scheibenelementen 1 in ein Gehäuse 11 eingesetzt ist. Die obere Abdeckplatte 9 ist mittels einer Dichtung 11a gegenüber dem Gehäuse 11 abgedichtet. Während die gasseitigen Strömungspfade erster Art wie im ersten Ausführungsbeispiel über Zuführ- und Abführkanäle 4 angebunden und stoffschlüssig gegenüber einem Außenraum abgedichtet sind, weisen die Strömungskanäle zweiter Art 3 über entsprechend ausgeführte Zuführungen (nicht dargestellt) eine Verbindung mit dem vom Gehäuse 11 umschlossenen Raum auf. Das Gehäuse 11 weist im vorliegenden Ausführungsbeispiel nach Fig. 2 einen zuführenden oder abführenden Anschluss 5' für das zweite Fluid auf, während der andere Anschluss 5 für das zweite Fluid wie im ersten Ausführungsbeispiel im Bereich der oberen Abdeckung 9 vorgesehen ist und einen senkrecht zu der Ebene der Scheibenelemente 1 erstreckten Kanal bildet. Je nach Anforderungen können auch beide oder gar keine Zuführungen für das zweite Fluid an dem Gehäuse 11 vorgesehen sein.

Bei dem Gehäuse 11 kann es sich insbesondere um eine Ausnehmung in einem Bauteil des Verbrennungsmotors handeln, z. B. eine Ausnehmung in einem Ansaugmodul des Motors.

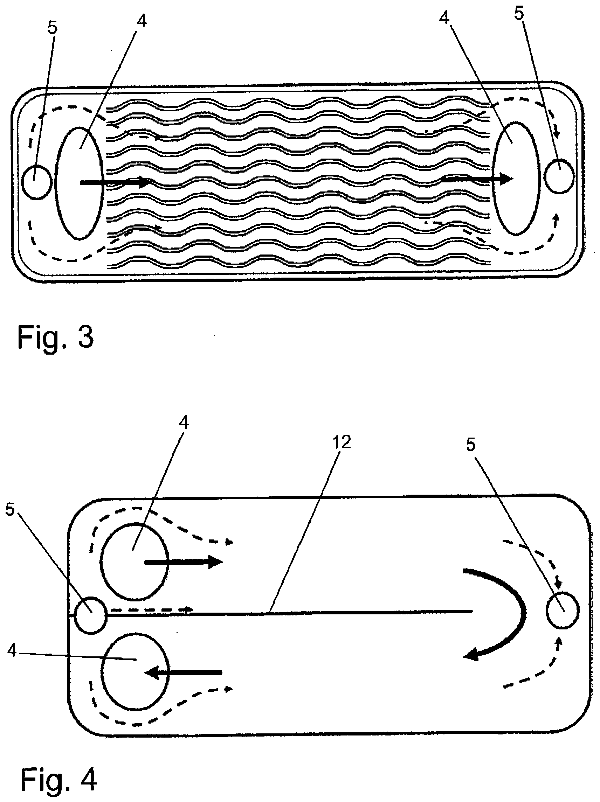

Fig. 3 zeigt eine schematische Draufsicht auf den Wärmetauscher aus Fig. 1 von oben, wobei die Wellenform der Strömungspfade 2, 3 schematisch angedeutet ist. Die Längsrichtung des Wärmetauschers verläuft in der Zeichnungsebene von links nach rechts, wobei vorliegend die Strömungsrichtungen von erstem Fluid und zweitem Fluid durch Pfeile angedeutet sind und in gleicher Richtung verlaufen. Sie können grundsätzlich aber auch in entgegengesetzter Richtung verlaufen (Gegenstrom-Prinzip). Beide Fluide treten jeweils an einer Seite des Wärmetauschers bezüglich der Längsrichtung ein und auf der gegenüberliegenden Seite bezüglich der Längsrichtung wieder aus. Es handelt sich daher bezüglich beider Fluide um einen I-flow-Wärmetauscher.

Bei dem Ausführungsbeispiel nach Fig. 4 verläuft die Strömung des zweiten, flüssigen Fluids im Wesentlichen wie in dem Ausführungsbeispiel nach Fig. 3, wobei die Anschlüsse 5 gegenüberliegend endseitig bezüglich der Längsrichtung angeordnet sind. Hinsichtlich des ersten, gasförmigen Fluids sind die Anschlüsse 4 jeweils im gleichen Endbereich bezüglich der Längsrichtung angeordnet und auf der gasführenden Seite der Scheibenelemente 1 befindet sich ein Trennsteg 12, durch den ein U-förmiger Verlauf des Gasstroms ausgebildet wird. Der Gasstrom strömt dabei parallel zu der Längsrichtung zum gegenüberliegenden Endbereich hin, wird dort in einem Umlenkbereich 13 um 180° umgelenkt und strömt über die Längsrichtung wieder zurück zum jeweils anderen gasseitigen Anschluss. In diesem Ausführungsbeispiel ist der Wärmetauscher somit bezüglich des ersten Fluids als U-flow-Wärmetauscher und bezüglich des zweiten Fluids als I-flow-Wärmetauscher ausgeformt.

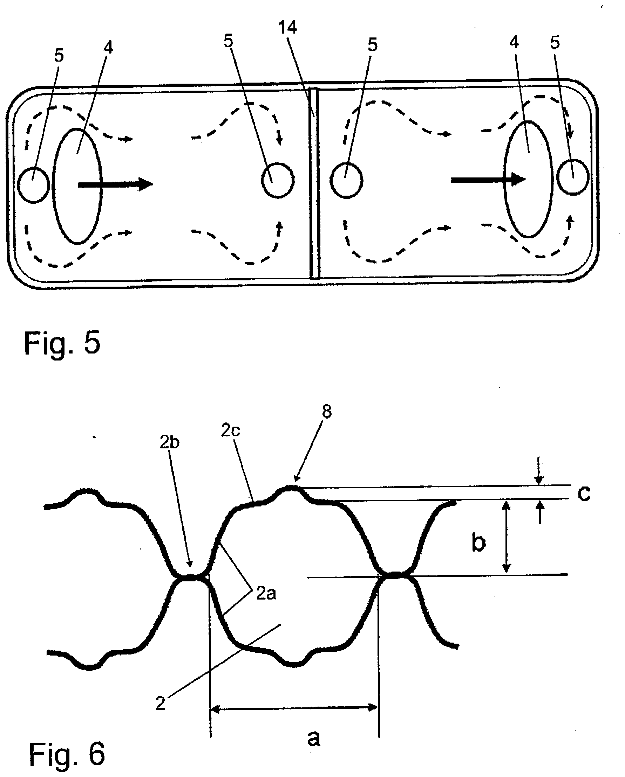

Fig. 5 zeigt ein weiteres Ausführungsbeispiel, bei dem nur seitens des zweiten, flüssigen Fluids ein sich senkrecht zur Längsrichtung erstreckender Trennsteg 14 ausgebildet ist. Hinsichtlich des ersten, gasförmigen Fluids ist der Wärmetauscher wie im ersten Ausführungsbeispiel nach Fig. 1 als einfacher I-flow-Wärmetauscher ausgeführt. Bezüglich des zweiten Fluids liegen in jedem der durch den Steg 14 abgetrennten Strömungsbereiche ein Einlasskanal und ein Auslasskanal 4 vor. Somit sind in bezüglich der Gasströmungsrichtung voneinander getrennten, nacheinander angeordneten Raumbereichen 2 getrennte Fluten für das zweite Fluid vorgesehen, so dass in der ersten Flut (linke Seite der Zeichnung Fig. 5) auch ein anderes Fluid als in der zweiten Flut (rechte Seite der Zeichnung Fig. 5) strömen kann. Insbesondere kann es sich dabei um eine zweistufige Kühlung des Gasstroms handeln, z. B. mittels eines relativ warmen zweiten Fluids der ersten Flut, z. B. Hauptmotor-Kühlmittel, und eines kühleren dritten Fluids der Flut der rechten Wärmetauscherhälfte, z. B. eines Niedertemperatur-Kühlmittelkreises. Hierdurch wird insgesamt eine besonders effektive Kühlung des Gasstroms bei gegebenem Bauraum erreicht.

Fig. 6 zeigt eine im Wesentlichen maßstabsgerechte Vergrößerung eines Querschnitts durch die Scheibenetemente1 bzw. Strömungspfade 2, 3. Bei einer bevorzugten Ausführungsform beträgt die Breite a eines Strömungskanals erster Art zwischen etwa 1,5 mm und etwa 5 mm, insbesondere etwa 3 mm. Die halbe Höhe b eines Strömungskanals erster Art beträgt zwischen etwa 1 mm und etwa 4 mm, so dass die Höhe des Strömungskanals als etwa gleichgroß oder etwas größer ist als die Breite a. Die in Längsrichtung ausgeformte Rille 8 steht über die Wandung der Strömungskanäle zwischen etwa 0,1 mm und etwa 1 mm hervor.

Bei sämtlichen der Ausführungsbeispiele kann es sich bevorzugt um einen Abgaskühler und/oder einen Ladeluftkühler für einen Verbrennungsmotor eines Kraftfahrzeugs handeln. Im Fall eines Ladeluftkühlers wird aus Kosten- und Gewichtsgründen häufig Aluminium als Material bevorzugt werden. Dabei können die Kühler auf bekannte Art durch Verlötung von lotplattierten Aluminiumblechen hergestellt werden.

Der Gaskühler kann insbesondere auch als Abgaskühler ausgelegt sein. Hierbei muss besondere Rücksicht auf die korrosiven Eigenschaften von Abgas und dem bei der Kühlung ggf. ausfallenden Abgaskondensat genommen werden. Entsprechend ist es vorteilhaft vorgesehen, dass die Scheibenelemente entweder aus besonders beschichteten, z. B. zinkhaltig plattierten Aluminiumblechen oder aus Edelstahlblechen bestehen. Verlötungen von Edelstahlblechen zu Wärmetauschern nach Scheibenkühlerbauart sind ebenfalls bekannt, z. B. indem über ein Bindemittel pulverförmiges Nickellot auf die für die Verlötung relevanten Oberflächen des Edelstahls aufgebracht wird. Nach Montage der geformten Bleche kann dann der gesamte Gaskühler in einem Lötofen verlötet werden.

Hinsichtlich der Verbindung der benachbarten Scheibenelemente 1, z. B. in den angrenzenden Bereichen 2b, wurde bereits erwähnt, dass benachbarte Strömungspfade der gleichen Art nicht dichtend voneinander getrennt sein müssen, dies aber sein können. Ist eine dichtende Trennung nicht erwünscht, so kann die Anlage benachbarter Scheibenelemente z. B. auch über Noppen oder andere abschnittsweise Vorsprünge erfolgen.

Grundsätzlich ist es möglich, durch geeignete Gestaltung die Scheibenelemente 1 als Gleichteile auszuführen, so dass wechselweise um 180° um die Längsachse gedrehte Scheibenelemente aufeinander liegen. Es kann aber auch allgemein vorgesehen sein, dass die Scheibenelemente 1 nicht als Gleichteile ausgeformt sind.

Es versteht sich, dass die spezifischen Merkmale der verschiedenen Ausführungsbeispiele je nach Anforderungen sinnvoll miteinander kombiniert werden können.

## Patentansprüche

1. Gaskühler, insbesondere für einen Verbrennungsmotor, umfassend eine Mehrzahl von sich in einer Ebene erstreckenden, parallel aufeinander gestapelten Scheibenelementen (1), wobei zumindest ein Anschlussbereich (4, 5) für ein Fluid als im Wesentlichen senkrecht zu der Ebene verlaufender, durch fluchtende Durchbrechungen der Scheibenelemente ausgebildeter Kanal ausgeformt ist, wobei jeweils ein Paar der aufeinander gestapelten Scheibenelemente (1) eine Schar von ersten kanalartigen Strömungspfaden (2) zur Führung eines gasförmigen Fluids ausformen, wobei jeweils ein Paar der aufeinander gestapelten Scheibenelemente (1) eine Schar von zu den ersten kanalartigen Strömungspfaden (2) benachbarten, thermisch verbundenen zweiten kanalartigen Strömungspfaden (3) zur Führung eines zweiten, insbesondere flüssigen Fluids ausformen, wobei sowohl die ersten kanalartigen Strömungspfade (2) als auch die zweiten kanalartigen Strömungspfade (3) zumindest über einen überwiegenden Teil ihrer Länge parallel zueinander in einer Längsrichtung des Gaskühlers verlaufen, **dadurch gekennzeichnet dass** zumindest die ersten kanalartigen Strömungspfade (2) und die zweiten kanalartigen Strömungspfade (3) einen wellenförmigen Verlauf in der Längsrichtung aufweisen.

2. Gaskühler nach Anspruch 1, **dadurch gekennzeichnet, dass** zumindest einige der ersten Strömungspfade (2) zumindest eine in der Längsrichtung verlaufende Rille (8) aufweisen.

3. Gaskühler nach Anspruch 1 oder 2, **dadurch gekennzeichnet, dass** der Gaskühler ein Gehäuse (11) aufweist und die aufeinander gestapelten Scheibenelemente (1) in dem Gehäuse (11) angeordnet sind.

4. Gaskühler nach Anspruch 3, **dadurch gekennzeichnet, dass** zumindest ein Anschluss (5') für das zweite Fluid an dem Gehäuse (11) vorgesehen ist.

5. Gaskühler nach einem der vorhergehenden Ansprüche, **dadurch gekennzeichnet, dass** eine maximale Breite (a) zumindest einiger der ersten Strömungspfade (2) zwischen etwa 1,5 mm und etwa 5 mm beträgt.

6. Gaskühler nach einem der vorhergehenden Ansprüche, **dadurch gekennzeichnet, dass** eine maximale Höhe (b) zumindest einiger der ersten Strömungspfade (2) zwischen etwa 2 mm und etwa 8 mm beträgt.

7. Gaskühler nach einem der vorhergehenden Ansprüche, **dadurch gekennzeichnet, dass** eine Tiefe (c) einer längsgerichteten Rille (8) in der Wandung zumindest einiger der ersten Strömungspfade (2) zwischen etwa 0,1 mm und etwa 1 mm beträgt.

8. Gaskühler nach einem der vorhergehenden Ansprüche, **dadurch gekennzeichnet, dass** zumindest seitens des ersten Fluids keine zusätzlichen Turbulenzeinlagen zwischen den Scheibenelementen (1) vorgesehen sind.

9. Gaskühler nach einem der vorhergehenden Ansprüche, **dadurch gekennzeichnet, dass** die ersten Strömungspfade (2) über einen ersten Abschnitt ihres Verlaufs thermisch mit den zweiten Strömungspfaden (3) verbunden sind und über einen zweiten Abschnitt ihres Verlaufs thermisch mit einer Schar von dritten Strömungspfaden verbunden sind.

10. Gaskühler nach einem der vorhergehenden Ansprüche, **dadurch gekennzeichnet, dass** der Gaskühler bezüglich der Strömung beider Fluide als Kühler mit einem I-förmigen Stromverlauf ausgebildet ist.

11. Gaskühler nach einem der Ansprüche 1 bis 9, **dadurch gekennzeichnet, dass** der Gaskühler bezüglich der Strömung des ersten Fluids und/oder des zweiten Fluids als Kühler mit einem U-förmigen Stromverlauf ausgebildet ist.

12. Verwendung eines Gaskühlers nach einem der vorhergehenden Ansprüche, **dadurch gekennzeichnet, dass** das gasförmige Fluid Abgas, Ladeluft oder ein Abgas-Ladeluft-Gemisch des Verbrennungsmotors ist.

13. Verbrennungsmotor mit einem Gaskühler nach einem der vorhergehenden Ansprüche 3 bis 12, **dadurch gekennzeichnet, dass** zumindest ein Teil des Gehäuses (11) des Gaskühlers als Aussparung in einem Bauteil des Verbrennungsmotors ausgebildet ist.

## Claims

1. A gas cooler, in particular for an internal combustion engine, comprising a plurality of disc elements (1) extending in one plane and stacked onto each other in parallel, wherein at least one connection region (4, 5) for a fluid is formed as a channel which runs substantially perpendicular to the plane and is designed by flush openings of the disc elements, wherein one pair each of the disc elements (1) stacked onto each other forms a group of first channel-like flow paths (2) for guiding a gaseous fluid, wherein one pair each of the disc elements (1) stacked onto each other forms a group of second channel-like flow paths (3) adjacent to and thermally connected to the first channel-like flow paths (2) for guiding a second, in particular liquid fluid, wherein both the first channel-like flow paths (2) and the second channel-like flow paths (3) run parallel to one another over at least a major part of their length in a longitudinal direction of the gas cooler, **characterised in that** at least the first channel-like flow paths (2) and the second channel-like flow paths (3) have a wavy course in the longitudinal direction.

2. The gas cooler according to claim 1, **characterised in that** at least some of the first flow paths (2) have at least one groove (8) running in the longitudinal direction.

3. The gas cooler according to claim 1 or 2, **characterised in that** the gas cooler has a housing (11) and the disc elements (1) stacked onto each other are arranged inside the housing (11).

4. The gas cooler according to claim 3, **characterised in that** at least one connection (5') for the second fluid is provided on the housing (11).

5. The gas cooler according to one of the preceding claims, **characterised in that** a maximum width (a) of at least some of the first flow paths (2) is between about 1.5 mm and about 5 mm.

6. The gas cooler according to one of the preceding claims, **characterised in that** a maximum height (b) of at least some of the first flow paths (2) is between about 2 mm and about 8 mm.

7. The gas cooler according to one of the preceding claims, **characterised in that** a depth (c) of a longitudinal groove (8) in the wall of at least some of the first flow paths (2) is between about 0.1 mm and about 1 mm.

8. The gas cooler according to one of the preceding claims, **characterised in that** at least on the part of the first fluid no additional turbulence inserts are provided between the disc elements (1).

9. The gas cooler according to one of the preceding claims, **characterised in that** the first flow paths (2) are thermally connected to the second flow paths (3) via a first section of their course and are thermally connected to a group of third flow paths via a second section of their course.

10. The gas cooler according to one of the preceding claims, **characterised in that** the gas cooler, regarding the flow of both fluids, is designed as a cooler with an I-shaped flow course.

11. The gas cooler according to one of claim 1 to 9, **characterised in that** the gas cooler, regarding the flow of the first fluid and/or the second fluid, is designed as a cooler with a U-shaped flow course.

12. Use of a gas cooler according to one of the preceding claims, **characterised in that** the gaseous fluid is exhaust gas, charge air or a mixture of exhaust gas and charge air of the internal combustion engine.

13. An internal combustion engine with a gas cooler according to one of the preceding claims 3 to 12, **characterised in that** at least a part of the housing (11) of the gas cooler is designed as a recess in a component of the internal combustion engine.

## Revendications

1. Refroidisseur de gaz, en particulier pour un moteur à explosion, comprenant une pluralité d'éléments à plaques (1) s'étendant dans un plan et empilés parallèlement les uns sur les autres, où au moins une zone de raccordement (4, 5) pour un fluide est configurée comme un conduit s'étendant pratiquement de façon perpendiculaire au plan et formé par des passages traversants, alignés, des éléments à plaques, où une paire des éléments à plaques (1) empilés les uns sur les autres forme à chaque fois une multitude de premiers trajets d'écoulement (2) en forme de conduits et servant au guidage d'un fluide gazeux, où une paire des éléments à plaques (1) empilés les uns sur les autres forme à chaque fois une multitude de deuxièmes trajets d'écoulement (3) en forme de conduits et servant au guidage d'un second fluide, en particulier liquide, lesdits deuxièmes trajets d'écoulement étant reliés thermiquement et disposés de manière contiguë aux premiers trajets d'écoulement (2) en forme de conduits, où, aussi bien les premiers trajets d'écoulement (2) en forme de conduits, que les deuxièmes trajets d'écoulement (3) en forme de conduits, s'étendent, au moins sur une majeure partie de leur longueur, parallèlement les uns aux autres, dans une direction longitudinale du refroidisseur de gaz, **caractérisé en ce qu'**au moins les premiers trajets d'écoulement (2) en forme de conduits et les deuxièmes trajets d'écoulement (3) en forme de conduits présentent un profil de forme ondulée dans le sens de la longueur.

2. Refroidisseur de gaz selon la revendication 1, **caractérisé en ce qu'**au moins quelques-uns des premiers trajets d'écoulement (2) présentent au moins une rainure (8) s'étendant dans le sens de la longueur.

3. Refroidisseur de gaz selon la revendication 1 ou 2, **caractérisé en ce que** le refroidisseur de gaz présente un carter (11), et les éléments à plaques (1) empilés les uns sur les autres sont disposés dans le carter (11).

4. Refroidisseur de gaz selon la revendication 3, **caractérisé en ce qu'**il est prévu, sur le carter (11), au moins un raccordement (5') pour le second fluide.

5. Refroidisseur de gaz selon l'une quelconque des revendications précédentes, **caractérisé en ce qu'**une largeur maximale (a) d'au moins quelques-uns des premiers trajets d'écoulement (2) est comprise entre 1,5 mm environ et 5 mm environ.

6. Refroidisseur de gaz selon l'une quelconque des revendications précédentes, **caractérisé en ce qu'**une hauteur maximale (b) d'au moins quelques-uns des premiers trajets d'écoulement (2) est comprise entre 2 mm environ et 8 mm environ.

7. Refroidisseur de gaz selon l'une quelconque des revendications précédentes, **caractérisé en ce qu'**une profondeur (c) d'une rainure (8) orientée dans le sens de la longueur est comprise, dans la paroi d'au moins quelques-uns des premiers trajets d'écoulement (2), entre 0,1 mm environ et 1 mm environ.

8. Refroidisseur de gaz selon l'une quelconque des revendications précédentes, **caractérisé en ce qu'**aucun élément intermédiaire supplémentaire générant des turbulences n'est prévu entre les éléments à plaques (1), au moins du côté du premier fluide.

9. Refroidisseur de gaz selon l'une quelconque des revendications précédentes, **caractérisé en ce que** les premiers trajets d'écoulement (2), sur un premier tronçon de leur parcours, sont reliés thermiquement aux deuxièmes trajets d'écoulement (3) et, sur un deuxième tronçon de leur parcours, sont reliés thermiquement à une multitude de troisièmes trajets d'écoulement.

10. Refroidisseur de gaz selon l'une quelconque des revendications précédentes, **caractérisé en ce que** le refroidisseur de gaz est conçu, par rapport à l'écoulement des deux fluides, comme un refroidisseur ayant un profil de flux en forme de 1.

11. Refroidisseur de gaz selon l'une quelconque des revendications 1 à 9, **caractérisé en ce que** le refroidisseur de gaz est conçu, par rapport à l'écoulement du premier fluide et / ou du second fluide, comme un refroidisseur ayant un profil de flux en forme de U.

12. Utilisation d'un refroidisseur de gaz selon l'une quelconque des revendications précédentes, **caractérisé en ce que** le fluide gazeux est un gaz d'échappement, de l'air de suralimentation ou un mélange de gaz d'échappement et d'air de suralimentation du moteur à explosion.

13. Moteur à explosion comprenant un refroidisseur de gaz selon l'une quelconque des revendications 3 à 12, **caractérisé en ce qu'**au moins une partie du carter (11) du refroidisseur de gaz est configurée comme un évidement formé dans un composant du moteur à explosion.
